# NOUVEAU FASCICULE DE BREVET EUROPEEN

(11) **EP 0 549 475 B2**
(45) Date de publication et mention de la décision concernant l'opposition: **11.08.1999**
(45) Mention de la délivrance du brevet: 05.06.1996
(21) Numéro de dépôt: 92403547.0
(22) Date de dépôt: 23.12.1992
(51) Int. Cl.: F04D 29/42, B60H 1/00

(54) **Boîtier de pulseur d'air en particulier pour une installation de chauffage et de ventilation d'un véhicule automobile**
Lüftergehäuse, insbesondere für eine Heizung- und Lüftungsanlage eines Kraftfahrzeuges
Casing of an air blower, particularly for a heating and ventilation system of a motor vehicle

(30) Priorité: 24.12.1991 FR 9116123
(43) Date de publication de la demande: 30.06.1993
(73) Titulaire: VALEO CLIMATISATION, 78321 La Verrière (FR)
(72) Inventeur: Raccouard, Michel, 78310 Maurepas (FR)
(74) Mandataire: Gamonal, Didier

(56) Documents cités:
- DE-A- 3 705 630
- GB-A- 1 176 054
- US-A- 4 672 819
- US-A- 4 902 203
- PATENT ABSTRACTS OF JAPAN vol. 7, no. 16 (M-187)(1161) 22 Janvier 1983, & JP-A-57 172 814 (NISSAN) 23 Octobre 1982

## Description

L'invention concerne un boîtier de pulseur d'air destiné notamment à une installation de chauffage et de ventilation pour véhicule automobile.

On connaît, notamment par le document US-A-4 902 203, des boîtiers de ce type qui comprennent un premier élément de boîtier et un second élément de boîtier assemblés l'un à l'autre et constituant une conduite d'entrée d'air, une enveloppe de réception d'un groupe motoventilateur et une conduite de sortie d'air.

Le groupe motoventilateur comprend un moteur électrique entraînant une turbine pour aspirer de l'air admis dans la conduite d'entrée d'air et le pulser par la conduite de sortie d'air. Ce moteur est généralement porté par un support qui est reçu dans le boîtier.

Dans les pulseurs d'air connus, les deux éléments de boîtier sont généralement formés de deux pièces moulées qui sont assemblées l'une à l'autre par des agrafes, ou moyens analogues, qui rendent difficiles le démontage du boîtier dans le cas où une intervention d'ordre mécanique ou électrique doit être effectuée sur le groupe motoventilateur.

Cette intervention est en outre compliquée par le fait que le boîtier du pulseur est très souvent d'un accès difficile, du fait qu'il est disposé à proximité d'une cloison qui sépare le compartiment moteur et l'habitacle du véhicule automobile.

Dans le cas du document JP-A-57-172814, conforme au préambule de la revendication 1, le boîtier est formé de deux éléments assemblés l'un à l'autre selon un premier plan, et il est prévu qu'une partie d'un des éléments du boîtier, celle au voisinage de la réception du groupe motoventilateur, soit mobile autour d'un axe perpendiculaire au plan d'assemblage de manière à permettre le démontage du groupe motoventilateur. En pratique, la partie mobile est reliée par un film mince formant charnière à l'autre partie fixe de cet élément de boîtier servant de réceptacle à la turbine du groupe motoventilateur présentant une plaque de fermeture de cet élément et un moteur saillant à l'extérieur du boîtier. L'autre élément de boîtier présente la conduite d'entrée d'air débouchante dans l'autre élément. Le boîtier est donc encombrant en largeur puisque la conduite d'entrée d'air et le moteur sont disposés de part et d'autre dudit élément de boîtier servant de réceptacle à la roue de turbine.

En outre, ce boîtier doit être bouché par une plaque de fermeture appartenant au groupe motoventilateur.

Ainsi, dans ce type de boîtier, il est nécessaire de disposer d'un espace assez grand pour pouvoir intervenir sur le groupe motoventilateur, espace que l'on ne dispose généralement pas.

L'invention a notamment pour but de remédier aux inconvénients précités.

Suivant l'invention, ce problème est résolu par la partie caractérisante de la revendication 1.

Du fait que la seconde partie du second élément de boîtier peut pivoter par rapport au premier élément de boîtier, il est possible d'ouvrir facilement l'enveloppe enfermant l'ensemble du groupe motoventilateur pour accéder à ce dernier au cas où une intervention soit rendue nécessaire.

Le pivotement de la partie mobile du second élément de boîtier, entre sa position de fermeture et sa position d'ouverture, n'affecte en rien la conduite d'entrée d'air et la conduite de sortie d'air dont les configurations respectives restent-inchangées.

Le pivotement de cette partie mobile du boîtier permet seulement d'accéder à la région du boîtier qui contient le groupe motoventilateur, c'est-à-dire à une région restreinte.

Du fait que la seconde partie mobile du second élément de boîtier ainsi que le premier élément de boîtier possèdent, en position de fermeture, un plan d'assemblage qui contient l'axe de rotation du moteur du groupe motoventilateur, l'extraction de l'ensemble du groupe motoventilateur est facilitée lorsque la partie mobile précitée du boîtier est en position d'ouverture.

Dans une forme de réalisation préférée de l'invention, le premier élément de boîtier est formé d'une seule pièce par moulage d'une matière plastique.

Dans le cas où le groupe motoventilateur comporte un support du moteur, il est avantageux que le premier élément de boîtier et la partie mobile du second élément de boîtier possèdent des moyens de réception dudit support.

Selon une autre caractéristique de l'invention, le boîtier comprend des moyens d'assemblage, de préférence facilement démontables, de la seconde partie du second élément de boîtier avec le premier élément de boîtier. Ces moyens sont avantageusement constitués par des vis ou analogues, plutôt que par des agrafes.

Dans la description qui suit, faite seulement à titre d'exemple, on se réfère au dessin annexé, sur lequel :
- la figure 1 est une vue en élévation d'un boîtier de pulseur d'air, selon l'invention, représenté en position de fermeture ; - la figure 2 est une vue en élévation du boîtier de la figure 1, représenté en position d'ouverture, le groupe motoventilateur étant représenté en cours d'extraction ;
- la figure 3 est un détail de l'articulation des deux parties du second élément du boîtier des figures 1 et 2 ; et
- la figure 4 représente schématiquement l'assemblage de deux parties de boîtier au moyen d'une agrafe.

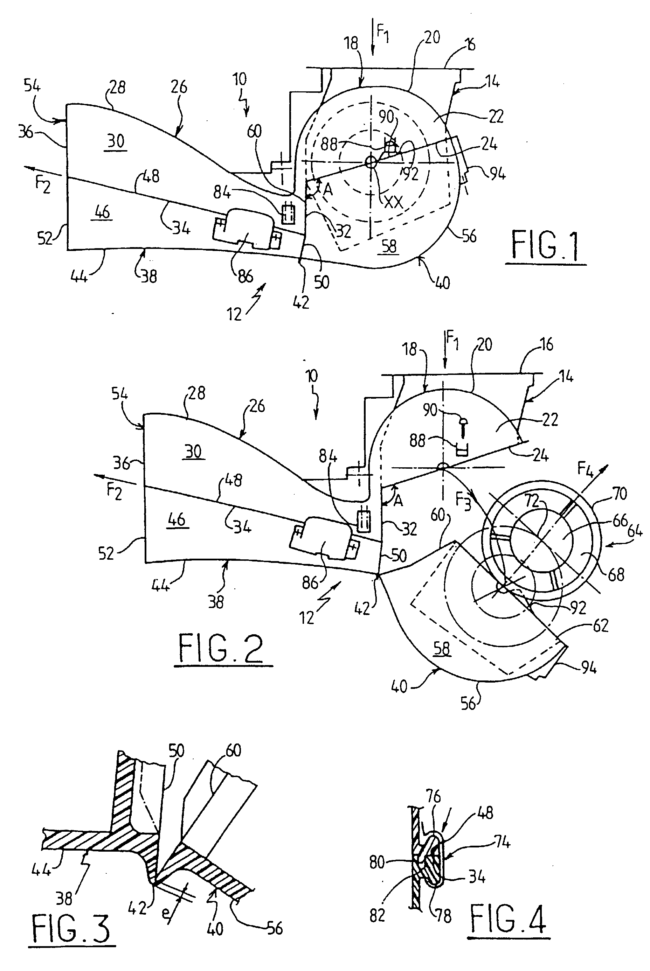

Le boîtier représenté aux figures 1 et 2 comprend un premier élément de boîtier 10 et un second élément de boîtier 12 propres à être assemblés l'un à l'autre.

Le premier élément de boîtier 10 est réalisé d'une seule pièce, par exemple par moulage d'une matière plastique. Il constitue une conduite d'entrée d'air 14, de section générale sensiblement rectangulaire, pourvue d'une bouche d'entrée 16, également de section générale sensiblement rectangulaire, qui s'étend dans un plan perpendiculaire au dessin. La conduite 14 débouche dans une enveloppe 18, de forme générale semi-cylindrique, limitée par une paroi semi-cylindrique 20 centrée autour d'un axe X-X perpendiculaire au plan du dessin. L'enveloppe 18 est limitée en outre par deux joues d'extrémité 22, de forme générale semi-circulaire, dont une seule est visible sur les figures 1 et 2. Les deux joues 22 et la paroi semi-cylindrique 20 aboutissent à un bord d'assemblage 24, à contour en U, qui contient l'axe X-X précité.

L'élément 10 comprend aussi une moitié 26 d'une conduite de sortie d'air qui s'étend dans une direction sensiblement perpendiculaire à la direction de la conduite d'entrée d'air 14.

Cette moitié 26 est limitée extérieurement par une paroi 28 à génératrices parallèles, de forme incurvée, qui prolonge la paroi semi-cylindrique 20. La moitié 26 est en outre limitée par deux joues latérales 30 dont une seule est visible sur les figures 1 et 2. Les deux joues 30 prolongent respectivement les deux joues 22 de l'enveloppe 18.

Chacune des joues 30 aboutit, du côté de l'enveloppe 18, à un bord d'assemblage 32 qui forme avec le bord d'assemblage 24, un angle A supérieur à 90. Chaque bord 32 se raccorde à un bord d'assemblage 34 qui s'étend sur toute la longueur de la moitié 2o de la conduite. Ce bord 34 se raccorde, à son autre extrémité, à un bord 36 qui s'étend dans une direction sensiblement parallèle à celle du bord 32 et qui aboutit jusqu'à la paroi 28.

Le second élément de boîtier 12 comprend une première partie 38 et une seconde partie 40 articulées l'une à l'autre autour d'une articulation 42. Dans l'exemple, les parties 38 et 40 sont formées d'une seule pièce par moulage d'une matière plastique, l'articulation 42 étant formée par un film mince déformable formant charnière et reliant les parties 38 et 40 entre elles.

La première partie-38 est propre à s'assembler avec la moitié 26 pour former avec elle une conduite complète de sortie d'air.

La première partie 38 est limitée extérieurement par une paroi 44 à génératrices parallèles qui s'étend perpendiculairement au plan du dessin, ainsi que par deux joues 46 dont une seule est visible sur les figures 1 et 2. Chacune des joues 46 est limitée par un bord longitudinal 48, susceptible de s'assembler contre le bord longitudinal correspondant 34 de la moitié de conduite 26. Chaque bord 48 aboutit, d'un côté, à un bord d'extrémité 50 et, du côté opposé, à un bord d'extrémité 52. Dans la position d'assemblage, chaque bord 50 se situe sensiblement dans le prolongement du bord 32 homologue et chaque bord 52 se situe dans le prolongement du bord homologue 36.

Dans ces conditions, la moitié 26 et la première partie forment ensemble une conduite de sortie d'air qui aboutit à une bouche de sortie 54 de contour général sensiblement rectangulaire et qui s'étend dans une direction sensiblement perpendiculaire à celle de la bouche d'entrée 16.

La seconde partie 40 est destinée à former une demi-enveloppe montée à pivotement autour de l'articulation 42. Lorsque la moitié 26 de la conduite de sortie et la partie 38 sont assemblées l'une à l'autre, l'axe de l'articulation 42 est parallèle à l'axe X-X.

La partie 40 est limitée extérieurement par une paroi 56 à génératrices parallèles qui prolonge la paroi 44 ainsi que par deux joues d'extrémité 58 dont une seule est visible sur les figures 1 et 2. Chacune des joues 58 est limitée par un premier bord 60 qui s'étend à partir de l'axe d'articulation 42 et qui est propre à s'assembler contre les bords 50 et 32. Ce bord 60 se prolonge par un bord 62 qui forme, avec lui, l'angle A précité, ce bord 62 aboutissant jusqu'à la paroi 56.

La partie 40 peut pivoter entre une position de fermeture (figure 1) où la seconde partie 40 est adjacente au premier élément de boîtier 10 et plus particulièrement à l'enveloppe 18 et une position d'ouverture (figure 2) où cette seconde partie est éloignée du premier élément de boîtier.

L'enveloppe 18 et la partie 40 sont destinées à recevoir, en position de fermeture, un groupe motoventilateur 64. Ce dernier comprend un moteur 66 entraînant une turbine 68 autour d'un axe 70, ce moteur 66 étant porté par un support 72 de forme générale tronconique. Ce support est destiné à être reçu dans des logements appropriés (non représentés) que comportent respectivement l'élément 10 et la partie 40 de l'élément 12.

Dans la position de fermeture du boîtier (figure 1), l'axe 70 du moteur coïncide avec l'axe X-X précité. Cet axe 70 s'étend alors dans le plan d'assemblage entre l'enveloppe 18 et la partie 40.

Dans cette position de fermeture, de l'air peut pénétrer dans le boîtier par la bouche 16 dans la direction de la flèche F1 être accéléré par la turbine 68 pour être ensuite évacué par la bouche de sortie 54 dans la direction de la flèche F2.

La moitié 26 et la partie 38 peuvent être assemblées l'une à l'autre par tout moyen approprié, par exemple par des agrafes métalliques 74 en forme de c (figure 4), coopérant avec un bourrelet 76 du bord 34 et avec un bourrelet 7a du bord 48. Le bord 48 est avantageusement muni d'une nervure 80 propre à s'engager dans une rainure 82 du bord 48.

Dans l'exemple représenté aux figures 1 et 2, est, par ailleurs, munie d'un gousset d'assemblage 84 et chacune des joues 46 d'un étrier d'assemblage 86, en vue de la fixation du boîtier sur la carrosserie d'un véhicule automobile chaque joue 30

Le maintien de l'élément 10 et de la partie 40 en position de fermeture peut être réalisé par tout moyen mécanique connu. Dans l'exemple représenté, on prévoit sur chacune des joues 22 un étrier 88 permettant l'introduction d'une vis 90 dont la tige vient se visser dans un étrier support 92 prévu sur la joue 58 correspondante de la moitié 40. Si nécessaire, l'assemblage peut être réalisé aussi à l'aide d'agrafes métalliques analogues aux agrafes 74 ou par d'autres moyens équivalents.

Comme le montrent également les figures 1 et 2, la partie 40 est munie d'un support d'extrémité 94 permettant la fixation du boîtier sur un élément de la carrosserie du véhicule automobile.

Comme montré à la figure 3, l'articulation 42 entre les parties 38 et 40 est réalisée par un film mince ayant une épaisseur en autorisant le pivotement mutuel des deux parties par pliage du film. Cette épaisseur en est généralement inférieure à 1 mm pour un boîtier de dimensions standards réalisé dans une matière plastique semi-rigide.

Le boîtier de pulseur d'air de l'invention s'utilise de la façon suivante. Le boîtier est installé sur un véhicule automobile, de telle sorte que le groupe motoventilateur 64 soit enfermé dans le boîtier en position de fermeture.

S'il convient ultérieurement d'intervenir mécaniquement ou électriquement sur le groupe motoventilateur 64, il suffit simplement de défaire les moyens d'assemblage entre la partie 40 et l'élément 10, de faire pivoter cette partie 40 autour de son articulation 42 pour l'amener dans la position de la figure 2 dans laquelle le groupe motoventilateur pivote en même temps que la partie 40 (flèche F3). Ensuite, il suffit d'extraire le groupe motoventilateur de la partie 40 comme indiqué par la flèche F4.

L'invention est susceptible de nombreuses variantes de réalisation. En particulier, bien que l'élément de boîtier 10 ait été décrit comme un élément réalisé d'une seule pièce, il pourrait être formé aussi bien de deux parties assemblées l'une à l'autre.

## Revendications

1. Boîtier de pulseur d'air, comportant un premier élément de boîtier (10) et un second élément de boîtier (12) assemblés l'un à l'autre et constituant une conduite d'entrée d'air (14), une enveloppe (18,40) pour le logement d'au moins une turbine (68) d'un groupe motoventilateur (64) comprenant un moteur (66) entraînant une turbine (68) autour d'un axe de rotation (70) et une conduite de sortie d'air (26,38), dans lequel le second élément de boîtier (12) comprend, d'une part, une première partie fixe (38) assemblée au premier élément de boîtier (10), et, d'autre part, une seconde partie mobile (40) reliée par une articulation (42) à la première partie fixe et pivotant entre une position de fermeture où cette seconde partie (40) est adjacente au premier élément de boîtier (10) et une position d'ouverture où cette seconde partie (40) est éloignée du premier élément de boîtier (10) pour permettre l'accès à la turbine (68) du groupe motoventilateur, le second élément de boîtier (12) étant formé d'une seule pièce par moulage d'une matière plastique, l'articulation (42) entre la première partie (38) et la seconde partie (40) étant formée par un film mince déformable formant charnière et reliant ces deux parties entre elle-en ayant un axe parallèle à l'axe de rotation (70) du moteur (66) du groupe motoventilateur (64) et dans lequel le premier élément de boîtier (10) forme la conduite d'entrée d'air (14), et une moitié (26) de la conduite de sortie d'air, tandis que la première partie fixe (38) du second élément de boîtier (12) forme une partie de la conduite de sortie d'air et que la seconde partie mobile (40) du second élément de boîtier forme une partie de l'enveloppe du groupe motoventilateur (64),
caractérisé en ce que, en position de fermeture de la seconde partie mobile (40) du second élément de boîtier (12), l'enveloppe (18, 40) enferme le groupe motoventilateur, le premier élément de boîtier (10) formant une première moitié (18), de l'enveloppe (18, 40) du groupe motoventilateur (64), tandis que la seconde partie mobile (40) du second élément de boîtier (12) forme une seconde moitié (40) de l'enveloppe (18, 40) du groupe motoventilateur (64), adjacente dans cette position à ladite première moitié (18), en ce que ladite première moitié (18) et ladite seconde moitié (40) de l'enveloppe (18, 40) sont limitées chacune par deux joues d'extrémité (22, 58) de forme générale semi-circulaire et en ce que la seconde partie (40) mobile du second élément de boîtier (12) et le premier élément de boîtier (10) possèdent, en position de fermeture un plan d'assemblage qui contient l'axe de rotation (70) du moteur (66) du groupe motoventilateur (64).

2. Boîtier selon la revendication 1, caractérisé en ce que le premier élément de boîtier (10) est formé d'une seule pièce par moulage d'une matière plastique.

3. Boîtier selon l'une des revendications 1 ou 2, dans lequel le groupe motoventilateur (64) comporte un support moteur (72), caractérisé en ce que le premier élément de boîtier (10) et la partie mobile (40) du second élément de boîtier (1) possèdent des moyens de réception dudit support.

4. Boîtier selon la revendication 1 à 3, caractérisé en ce qu'il comprend des moyens d'assemblage (88, 90, 92) de la seconde partie (40)du second élément de boîtier (12) avec le premier élément de boîtier.

## Patentansprüche

1. Lüftergehäuse, umfassend ein erstes Gehäuseelement (10) und ein zweites Gehäuseelement (12), die miteinander verbunden sind und einen Lufteinlaßkanal (14), eine Ummantelung (18, 40) für die Aufnahme wenigstens einer Turbine (68) eines Lüftersatzes (64), der einen Motor (66) zum Antrieb einer Turbine (68) um eine Drehachse (70) umfaßt, und einen Luftauslaßkanal (26, 38) bilden, wobei das zweite Gehäuseelement (12) einerseits einen feststehenden ersten Teil (38), der mit dem ersten Gehäuseelement (10) verbunden ist, und andererseits einen beweglichen zweiten Teil (40) umfaßt, der durch ein Gelenk (42) mit dem feststehenden ersten Teil verbunden und schwenkbar zwischen einer Schließstellung, in der dieser zweite Teil (40) am ersten Gehäuseelement (10) anliegt, und einer Öffnungsstellung gelagert ist, in der dieser zweite Teil (40) vom ersten Gehäuseelement (10) entfernt ist, um den Zugang zum Lüftersatz zu ermöglichen, wobei das zweite Gehäuseelement (12) als einstückiges Kunststoff-Formteil ausgeführt ist, wobei das Gelenk (42) zwischen dem ersten Teil (38) und dem zweiten Teil (40) aus einer verformbaren dünnen Folie besteht, die ein Gelenkband bildet und diese beiden Teile miteinander verbindet, und eine zur Drehachse (70) des Motors (66) des Lüftersatzes (64) parallele Achse besitzt, und wobei das erste Gehäuseelement (10) den Lufteinlaßkanal (14) und eine Hälfte (26) des Luftauslaßkanals bildet, während der feststehende erste Teil (38) des zweiten Gehäuseelements (12) einen Teil des Luftauslaßkanals bildet und der bewegliche zweite Teil (40) des zweiten Gehäuseelements einen Teil der Ummantelung des Lüftersatzes (64) bildet,
**dadurch gekennzeichnet**, daß in der Schließstellung des beweglichen zweiten Teils (40) des zweiten Gehäuseelements (12) die Ummantelung (18, 40) den Lüftersatz umschließt, wobei das erste Gehäuseelement (10) eine erste Hälfte (18) der Ummantelung (18, 40) des Lüftersatzes (64) bildet, während der bewegliche zweite Teil (40) des zweiten Gehäuseelements (12) eine zweite Hälfte (40) der Ummantelung (18, 40) des Lüftersatzes (64) bildet, die in dieser Position an der besagten ersten Hälfte (18) anliegt, daß die besagte erste Hälfte (18) und die besagte zweite Hälfte (40) der Ummantelung (18, 40) jeweils durch zwei abschließende Seitenteile (22, 58) mit allgemeiner Halbkreisform begrenzt werden und daß der bewegliche zweite Teil (40) des zweiten Gehäuseelements (12) und das erste Gehäuseelement (10) in Schließstellung eine Verbindungsebene besitzen, welche die Drehachse (70) des Motors (66) des Lüftersatzes (64) enthält.

2. Gehäuse nach Anspruch 1, **dadurch gekennzeichnet**, daß das erste Gehäuseelement (10) aus einem einstückigen Kunststoff-Formteil besteht.

3. Gehäuse nach einem der Ansprüche 1 oder 2, bei dem der Lüftersatz (64) einen Motorträger (72) umfaßt, **dadurch gekennzeichnet**, daß das erste Gehäuseelement (10) und der bewegliche Teil (40) des zweiten Gehäuseelements (12) Aufnahmemittel für den besagten Motorträger besitzen.

4. Gehäuse nach einem der Ansprüche 1 bis 3, **dadurch gekennzeichnet**, daß es Montagemittel (88, 90, 92) zum Verbinden des zweiten Teils (40) des zweiten Gehäuseelements (12) mit dem ersten Gehäuseelement umfaßt.

## Claims

1. An air blower casing, comprising a first casing element (10) and a second casing element (12) assembled together and constituting an air suction duct (14), an envelope (18, 40) for containing within it at least one rotary blower (68) of a motorised blower unit (64) comprising a motor (66) which drives a rotary blower (68) about an axis of rotation (70), and an air delivery duct (26, 38), wherein the second casing element (12) comprises, firstly, a fixed first part (38) assembled to the first casing element (10), and, secondly, a movable second part (40) which is coupled to the fixed first part through an articulation (42), and which is pivotable between a closed position, in which the said second part (40) is adjacent to the first casing element (10), and an open position in which the said second part (40) is withdrawn away from the first casing element (10) so as to afford access to the rotary blower of the motorised blower unit, the second casing element (12) being formed in one piece by moulding in a plastics material, the articulation (42) between the first part (38) and the second part (40) being defined by a deformable thin film constituting a hinge and joining the two said parts together, having an axis parallel to the axis of rotation (70) of the motor (66) of the motorised blower unit (64), and wherein the first casing element (10) constitutes the air suction duct (14) and one half (26) of the air delivery duct, while the fixed first part (38) of the second casing element (12) constitutes a part of the air delivery duct, and the movable second part (40) of the second casing element constitutes a part of the envelope of the motorised blower unit (64),
characterised in that, in the closed position of the movable second part (40) of the second casing element (12), the envelope (18, 40) encloses the motorised blower unit, the first casing unit (10) constituting a first half (18) of the envelope (18, 40) of the motorised blower unit (64), while the movable second part (40) of the second casing element (12) constitutes a second half (40) of the envelope (18, 40) of the motorised blower unit (64), adjacent in that position to the said first half (18), in that the said first half (18) and the said second half (40) of the envelope (18, 40) are each limited by two end portions (22, 58) of generally semicircular form, and in that the movable second part (40) of the second casing element (12) and the first casing element (10) have, in the closed position, an assembly plane which contains the axis of rotation (70) of the motor (66) of the motorised blower unit (64).

2. A casing according to Claim 1, characterised in that the first casing element (10) is formed in one piece by moulding in a plastics material.

3. A casing according to Claim 1 or Claim 2, in which the motorised blower unit (64) includes a motor support (72), characterised in that the first casing element (10) and the movable part (40) of the second casing element (1) have means for receiving the said support.

4. A casing according to one of Claims 1 to 3, characterised in that it includes means (88, 90, 92) for assembling together the second part (40) of the second casing element (12) and the first casing element.
